(19) Europäisches Patentamt / European Patent Office / Office européen des brevets

(11) **EP 4 068 249 B1**

(12) **EUROPEAN PATENT SPECIFICATION**

(45) Date of publication and mention
of the grant of the patent:
**09.10.2024 Bulletin 2024/41**

(21) Application number: **21166147.5**

(22) Date of filing: **31.03.2021**

(51) International Patent Classification (IPC):
***G09B 21/00*** *(2006.01)*

(52) Cooperative Patent Classification (CPC):
**G09B 21/004**

(54) **DEVICE AND METHOD FOR SHIFTING A FLUID WITHIN A FLUID CHANNEL, USE OF THE DEVICE, AND TACTILE DISPLAY**

VORRICHTUNG UND VERFAHREN ZUM VERSCHIEBEN EINES FLUIDS IN EINEM FLUIDKANAL, VERWENDUNG DER VORRICHTUNG UND TAKTILE ANZEIGE

DISPOSITIF ET PROCÉDÉ DE COMMUTATION D'UN FLUIDE DANS UN CANAL DE FLUIDE, UTILISATION DU DISPOSITIF ET AFFICHAGE TACTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.10.2022 Bulletin 2022/40**

(73) Proprietors:
- **Glassomer GmbH**
  **79110 Freiburg (DE)**
- **Albert-Ludwigs-Universität Freiburg**
  **79098 Freiburg (DE)**

(72) Inventors:
- **Kotz, Frederik**
  **79232 March (DE)**
- **Rapp, Bastian**
  **79100 Freiburg im Breisgau (DE)**

(74) Representative: **Müller-Boré & Partner Patentanwälte PartG mbB Friedenheimer Brücke 21 80639 München (DE)**

(56) References cited:
**WO-A1-2004/001943     WO-A1-2016/205375
GB-A- 2 212 336**

EP 4 068 249 B1

**Description**

The present invention relates to a device and method for shifting a fluid within a fluid channel. In particular, the present invention relates to a microactuator, and more specifically to a tactile display.

Microactuators are key elements in many applications which require small footprint, highly integrated devices which generate a linear or angular movement. One application which requires highly scalable integrated actuator arrays are microfluidic applications suitable for high-density integration. These devices are key components in analytical and synthesis systems required, e.g., for the small-scale and high-density combinatorial synthesis of key reagents and drug screening. They are also key components in tactile devices, e.g., for assistive systems in applications where tactile information needs to be provided because visual information is not sufficient and/or not feasible. As an example, tactile displays have been envisioned for consoles in automotive applications where the driver may be guided by dynamic tactile information while keeping the eyes on the traffic. Another important application field for tactile displays are haptic displays for the visually impaired. Ever since Aristotle first classified the five human senses, sight has stood out as the most important one. In a world which has become visual in so many ways, the ability to perceive visual information is paramount. The proverb "A picture is worth a thousand words" sums up the immense information density encoded in visual information. From road signs to maps, statistical graphs, scientific presentations, even simple markings as, e.g., in elevators, graphical user interfaces on software and apps for smartphones or desktop PCs: How would we be able to interact with the modern age of information technology without sight? This is the reality for more than 285 million people worldwide according to the World Health Organization (WHO). Visual impairment is common, both in the developing as well as in the developed world. In the era of information technology, the inability to perceive visual information becomes the primary inhibitor for inclusion. Visually impaired people rely on two other senses to compensate the lack of visual feedback: hearing and touch. Examples of audio aids are the so-called screen reader or text-to-speech devices which convert textual information, e.g., from an email or a text file, to audible information. Alternatively, so-called Braille lines can be used which output a single line of text only. The text is encoded in Braille which uses an array of 6 tactile pixels (called taxels) to encode a single letter. A Braille line outputs a maximum of 80 characters and costs around 10.000 € which corresponds to a prize of 125 € per character and 20 € per actuator. However, these systems are not able to output graphical content. Charts, diagrams or maps can neither be processed by a screen reader nor by a Braille line. Windows, menus, icons, pictograms or fly-out bars that are natural helpers for sighted people in operating a desktop PC therefore remain inaccessible to visually impaired users. Imagine operating a modern computer program, state-of-the-art app or webpage without a graphical user interface relying on a single line of text as output only. This was the norm in the early 1970s console-type computers - an era long gone for sighted users.

Although systems for outputting graphical content are desperately needed, there are no so-called tactile displays on the market. Tactile displays are the equivalent of graphical displays for sighted people as they translate digital pixel graphics to "touchable" taxel graphics. Display technology for sighted users has seen astonishing improvements in recent decades and evolved to a state where more than 4k resolution screens are available even on mobile devices. Why has tactile display technology not evolved alongside? The reason is simple: Creating large-scale displays which effectively are arrays of millions of individually addressable light emitters (LEDs), is simple in terms of control electronics. However, creating a tactile display which effectively is an actuator array with thousands of individually addressable actuators is significant more challenging because actuators with suitable properties do not exist up to now. In order to be compatible with international norms, the distance between the actuators should be 1.4 mm (18 dpi which is the required resolution for tactile graphic reading), they must allow taxels heights of at least 500 $\mu$m ("contrast" required for tactile reading) and sustain forces of around 100 mN (force exerted by the human finger).

Within the present invention, a user study among 70 visually impaired users was carried out in collaboration with the Study Centre for the Visually Impaired (German: "Studienzentrum für Sehgeschädigte, SZS") at KIT, one of Europe's leading institution in the development of tools for the visually impaired. According to the results of this study, a tactile display should be portable and thus the actuators must be bistable requiring power only for switching from on-to off-state and vice-versa. The acceptable refresh rates, i.e., the time required until a complete page is "haptically visible", should be shorter than 10 s. The size of the display should be DIN-A4 size with full graphics resolution which corresponds to 30.000 (150 × 200) actuators. The display should cost less than 1.000 € which converts to a cost of only 3 Eurocent per actuator. One would imagine that suitable actuators should be available today. However, the current-state-of-the-art actuators do not fulfil the list of requirements. The required spacing of only 1.4 mm is a problem for most macroscopic actuators as, e.g., electro- or stepper motors cannot be sufficiently miniaturized. Additionally, using actuator concepts not optimized for massive parallelization usually yields per-actuator-costs which are significantly too high. Examples include the mechanical actuators of pin-printer heads of the early 1990s which cost around 2 € per actuator. The standard actuators used in Braille lines are piezoactuators which are not bistable, requiring complicated driving electronics and, most importantly, are also too expensive. In classical Braille lines they cost around 20 € per actuator. Interestingly, there are commercial systems using these actuators, e.g. by metec AG. For example, the per-actuator-cost may be 4 € and the high price of these displays, which is in the range of several 10.000 €, is due to the fact that the prize scales linearly with the number of taxels. Obviously, these systems are unaffordable for end users and therefore have little practical relevance. These systems are also not covered by health insurance. This has created a deadlock in the drive towards novel tactile display systems: As the systems are not reimbursed, visually impaired users will not be able to buy them and, as a consequence, there is little drive for industry to develop such systems. Being the commercial systems with the lowest per-actuator-costs, the "Hyperflat" system by metec AG is the de facto gold standard for tactile graphic displays. It only supports 3.645 taxels which corresponds to a display with 76 × 48 pixels. Such a display is only suitable for displaying extremely simplified graphics. For comparison, the first Nintendo Gameboy from 1989 had a display with 160 × 144 pixels. An almost 30 years old Gameboy has 6 times the number of pixels of a modern tactile display.

Setting up an actuator array for a tactile display with 30.000 taxels by linearly lining up tens of thousands of conventional macroscopic actuators is impossible. The only possibility is using microactuators for obtaining high-density actuator arrays. The prerequisites that a suitable actuator for such an array must fulfil are given, e.g., in DIN 32976:2007-08 and have been further refined by the inventors and others in extensive user studies:

- Taxel spacing should be 1.4 mm (18 dpi) which is the required resolution for tactile graphic reading;
- The size of a graphical tactile display should be DIN-A4. At 18 dpi resolution this is equivalent to roughly 30.000 (150 × 200) actuators;
- The actuators must allow taxels heights, i.e., actuator strokes, of at least 0.5 mm;
- The actuators must sustain a holding force of at least 100 mN;
- The actuator should be bistable: On- and the off-state must be latchable and energy should only be consumed during a change of state. Energy consumption required for switching must be low in order to allow the display to be operated by a battery and thus allow setting up mobile tactile displays;
- The acceptable refresh rates should be below 10 s;
- Ideally, the actuator should support different actuator strokes. This would allow encoding of "greyscale color" by using taxels at different heights;
- The total display costs should be smaller than 1.000 € which results in per-actuator costs of 3 Eurocents.

For example, US20180158367A1 describes a Braille device with fluid latching mechanism and a rather complex logical unit which is not suitable for high-density integration. US20120299905A1 describes a magnetorheological Braille point which makes use of changes in viscosity induced by applying magnetic fields. This concept scales badly and generating high-intensity magnetic fields usually requires bulky external components. WO2003081052A1 describes a thermopneumatic actuator suitable for tactile displays with rather small holding force. It suffers from the common problems of thermopneumatic actuators. US20140034141A1 and US9689408 describes concepts based on phase changes which could be used for setting up Braille displays but which require significant amounts of energy due to the necessity to induce a phase change locally. Moreover, a fundamental actuation concept is described in WO2013139418A1 in connection with phase-change actuators. This concept works, but phase-change actuators are very slow and very energy-intensive. Further, WO2004001943A1 describes a tactile device provided with a number of fluid elements. The fluid elements comprise capillary tubes each containing an electrically conducting fluid and an electrically insulating fluid, the conducting and insulating fluids being essentially immiscible and arranged on top of each other. By means of a power source, a fluid level can be changed as a result of electro-capillary pressure.

It is a problem of the present invention to provide a concept (device and method) that enables the realization of a tactile display which better addresses the needs of a user. In particular, it is a problem of the present invention to provide a tactile display. These problems are solved by the subject-matters of the independent claims. Preferred embodiments are defined by the dependent claims.

According to one aspect of the present invention, a fluid shifting device, i.e. a device for shifting a fluid within a fluid channel, is provided. The device comprises:

- a fluid channel comprising at least one chamber, each chamber being filled with a fluid comprising an electrolyte and having at least two inlets, wherein each inlet has a cross-section which is smaller than a cross-section of the at least one chamber;
- a sealing control element being enclosed in the fluid of the fluid channel for sealing the at least one chamber and controlling a shift of the fluid within the fluid channel in response to a control signal; and
- at least one pair of electrodes arranged such that the electrodes are in fluidic contact with the at least one chamber for causing, in response to the control signal, an electrocapillary force acting on the sealing control element;

wherein the sealing control element has a surface tension which is higher than a surface tension of the fluid, such that in the absence of the control signal at least a portion (and/or part) of the sealing control element is trapped in one of the at least one chamber due to an intrinsic capillary force, thereby sealing said one of the at least one chamber.

Preferably, the fluid shifting device is a device for opening and closing a fluid channel, and particularly for opening and closing a gate (here in the form of a chamber) of the fluid channel. In particular, the fluid shifting device is a device which is suitable to be used for or as an actuator or microactuator. In particular, the fluid shifting device is an (integrated) actuator or an (integrated) microactuator. The actuator or microactuator is advantageously suitable for massive parallelization.

The fluid of the fluid channel is preferably a liquid. Accordingly, in this case, the device may be referred to as a liquid shifting device. For example, "Galinstan" may be used as fluid or liquid. The fluid comprises an electrolyte, i.e. a substance that produces an electrically conducting solution when dissolved in a polar solvent (such as water). Within the present invention, the term "electrolyte" is particularly understood as an electrically conducting solution. Accordingly, the fluid may be such an electrically conducting solution and thus an electrolyte.

The device comprises one or more (e.g. two, three, four, etc.) chambers. Each chamber has at least two inlets. In other words, each chamber is (directly) connected to at least two inlets. In case of several chambers, the chambers and inlets may be arranged such that two chambers have one (and the same) inlet, i.e., two chambers are connected by one (and the same) inlet. In other words, one (and the same) inlet may be associated with two chambers. The at least one chamber and/or the inlets may have a cylindrical shape.

The sealing control element has a sealing and a controlling function, i.e., the sealing control element is both a sealing element and a control element. The sealing control element is suitable for (pressure-tight and/or fluid-tight) sealing the at least one chamber. In particular, when the sealing control element or at least a portion of the sealing control element is located and/or trapped in one of the least one chamber, the sealing control element seals said chamber in which the sealing control element (or at least a portion of the sealing control element) is located and/or trapped. In other words, the sealing control element is suitable to prevent a fluid flow through the chamber in which the sealing control element is located and/or trapped. Further, the sealing control element is suitable for controlling a shift (displacement) of the fluid within the fluid channel in response to a control signal. In other words, the sealing control element is suitable for controlling a fluid flow within or through the at least one chamber and/or the at least two inlets.

The control signal is particularly an electrical signal, i.e. an electrical potential or a voltage. In particular, the control signal is an external trigger that causes an electrocapillary force acting on the at least one sealing control element. The device may further comprise a control unit (e.g. one or more voltage sources that is/are controlled by a processor) for generating and applying control signals to the at least one pair of electrodes.

The at least one pair of electrodes are arranged in the fluid channel such that the electrodes are in fluidic contact with the at least one chamber. In particular, the electrodes are in contact with the electrolyte and thus in fluidic contact with the sealing control element. In particular, the at least one pair of electrodes are arranged in the fluid channel. The electrodes are configured to cause an electrocapillary force and/or an electrocapillary pressure acting on the sealing control element in response to the control signal.

Further, the sealing control element has a surface tension (and/or a surface energy) which is (significantly) higher than a surface tension (and/or surface energy) of the fluid, such that in the absence of the control signal at least a portion of the sealing control element is trapped in one of the at least one chamber due to an intrinsic capillary force (and/or an intrinsic capillary pressure). In other words, the sealing control element has a surface tension (and/or a surface energy) which is (significantly) higher than a surface tension (and/or surface energy) of the fluid, such that in the absence of the control signal the sealing control element is attracted by (at least) one of the at least one chamber due to an intrinsic capillary force. Within the present invention, an "intrinsic capillary force" (or an "intrinsic capillary pressure") is understood to be a force (or pressure) which occurs intrinsically (i.e. without external influences or triggers such as a control signal) due to capillary effects.

The device may comprise at least one sealing control element, i.e., the device may comprise a plurality of sealing control elements (e.g. two, three, four, etc. sealing control elements). Preferably, all sealing control elements have similar or the same properties. In particular, each sealing control element has a surface tension (and/or surface energy) which is higher than a surface tension (and/or surface energy) of the fluid, such that in the absence of the control signal the sealing control element is trapped in one of the at least one chamber, thereby sealing said one of the at least one chamber.

Preferably, in a stable state of the device, the sealing control element is located inside one of the at least one chamber and prevented to move out of said one of the at least one chamber (i.e. to move into and/or through the inlets of said one of the at least one chamber) due to an intrinsic (positive) capillary force and/or pressure that occurs as a result of the (small) dimension of the at least two inlets and the (high) surface tension of the sealing control element. In such a stable state, the sealing control element seals the chamber, i.e., it blocks a fluid flow through the chamber in which the sealing control element is located and/or trapped.

In particular, the present invention is based on capillarity, an effect intrinsic to microfluidics. Capillarity is the result of surface tension forces which define the ability (or inability) of a liquid to wet a material. Capillary forces are usually negligible in macroscopic systems but become dominant once the dimensions (e.g., of a channel) become small. If a liquid wets a material, i.e., it forms a (static) contact angle smaller than 90°, the liquid will be drawn into a microscopic channel made from this material without externally applied forces as a result of the negative capillary pressure. This capillary effect is the basis of capillary microfluidics. What makes capillarity so powerful is the fact that it scales extremely well when a system is miniaturized. Most actuation principles become significantly less powerful when miniaturizing the system as the forces scale with higher powers of the length scale. For example, pneumatic and hydraulic forces scale with the power of two, magnetism with the power of three to four. Surface tension forces scale only linearly and capillary forces, being the only exception, increase when the length is scaled down. This makes capillarity extremely suitable for miniaturization.

The present invention exploits capillarity in a way which has never been explored before. In general, capillary microfluidics makes use of negative capillary pressure, i.e., the ability of microchannels to draw liquids in. The present invention, however, uses the inverse effect, i.e., a positive capillary force and/or pressure which prevents liquid from penetrating into a microchannel.

Each inlet has a cross-section which is smaller than a cross-section of the at least one chamber. In particular, the at least one chamber has a dimension (e.g. a diameter) such that capillary effects are negligible, wherein the at least two inlets may have a dimension (e.g. a diameter) such that capillary effects are dominating (i.e. cannot be neglected). Thus, each inlet (or at least two inlets) may represent a capillary barrier. In other words, contrary to the at least one chamber, each inlet (or at least two inlets) may have such a small cross-section that capillary effects cannot be neglected and that therefore each inlet (or at least two inlets) acts (or act) as a capillary barrier.

In particular, each inlet has a cross-section which is smaller than a cross-section of the at least one chamber and the sealing control element has a surface tension which is higher than a surface tension of the fluid, such that in the absence of the control signal at least a portion and/or part of the sealing control element is trapped in one of the at least one chamber due to an intrinsic capillary force, thereby sealing said one of the at least one chamber. In other words, each inlet has a cross-section which is smaller than a cross-section of the at least one chamber and the sealing control element has a surface tension which is higher than a surface tension of the fluid, such that in the absence of the control signal the sealing control element is attracted by (at least) one of the at least one chamber due to an intrinsic capillary force.

In particular, each inlet has a cross-section being smaller than a cross-section of the at least one chamber, and the sealing control element has a surface tension which is higher than a surface tension of the fluid, such that:

in the absence of the control signal (when the sealing control element or at least a portion of the sealing control element is trapped in one of the at least one chamber) an intrinsic (positive) capillary force and/or pressure acting on the at least one sealing control element prevents that the sealing control element moves out from said one of the at least one chamber, and/or
the control signal is configured to cause an electrocapillary force (and/or pressure) acting on the at least one sealing control element, thereby enabling that the sealing control element at least partly moves out of said one of the at least one chamber. In particular, the electrocapillary force and/or pressure counteracts the intrinsic (positive) capillary force and/or pressure.

In a further preferred embodiment, the sealing control element is a fluid segment which is immiscible with the fluid. In other words, the sealing control element is a segment of the fluid (also referred to as carrier fluid or carrier liquid) of the fluid channel. The sealing control element may be a plug of an immiscible liquid which is inserted into the fluid (carrier liquid). More specifically, the sealing control element comprises or is made of a high-surface tension liquid which is immiscible with the carrier liquid. For example, the sealing control element may comprise or be made of a liquid metal. Alternatively or in addition, the sealing control element may comprise or be made of an eutectic salt solution and/or an ion gel.

In a further preferred embodiment, the device is configured to switch from a first stable state to a second stable state in response to the control signal, wherein the sealing control element and the control signal are configured such that the surface tension (and/or surface energy) of the sealing control element is reduced in the presence of the control signal (i.e., when the control signal is switched on), and increased again to its previous value in the absence of the control signal (i.e., when the control signal is switched off). Accordingly, the device is bistable. This means that after applying the control signal and removing the control signal, the device is in a stable state again. In particular, the device is configured to switch from a first stable state to a second stable state in response to the application of an electrical potential (or voltage) on or across the at least one pair of electrodes. In particular, the switch from the first stable state to the second stable state occurs due to a displacement of the sealing control element within the fluid channel.

Preferably, in response to the control signal, the sealing control element is displaced along a longitudinal axis of the fluid channel from a first chamber to a second chamber. The longitudinal axis of the fluid channel corresponds to an actuation direction. The displacement of the sealing control element from a first chamber to a second chamber particularly occurs through an inlet which connects the first chamber and the second chamber. Alternatively, the sealing control element is displaced orthogonal to the longitudinal axis (and/or actuation direction) of the fluid channel, thereby enabling the fluid to enter and/or pass the at least one chamber along the longitudinal axis of the fluid channel (i.e. in the actuation direction). In particular, the displacement of the sealing control element orthogonal to the longitudinal axis (and/or actuation direction) of the fluid channel opens a path through the at least one chamber.

In a further preferred embodiment, the device further comprises a pump [particularly a single syringe pump] for pumping fluid into (and preferably also out of) the fluid channel. Preferably, the pump is a single syringe pump. In particular, the fluid channel is an actuator channel, and the fluid is pumped between a feed channel (also referred to as main channel or shift channel) and the actuator channel.

In a further preferred embodiment, an end portion of the fluid channel (and/or an end portion of the device) is sealed with a reversibly deformable (i.e. elastic) membrane. Accordingly, an elastic membrane is arranged at an end portion of the device and/or at an end portion of the fluid channel. The elastic membrane can be deformed by shifting the fluid within the fluid channel. Preferably, the elastic membrane is an actuating element, the fluid channel is an actuator channel, and the device is a bistable actuator. In particular, the elastic membrane of the device serves for defining and/or setting a taxel (i.e. a tactile pixel). Accordingly, the actuator may be referred to as a tactile actuator.

A further aspect of the present invention relates to the use of the device according to the present invention for a tactile display, wherein a taxel is defined by shifting the fluid within the fluid channel. In particular, an actuating element such as an elastic membrane is deformed by shifting the fluid within the fluid channel, thereby defining the taxel. In particular, by shifting the fluid within the fluid channel into the direction of the actuating element, the actuating element is deformed and forms an elevation having a distinct height. Further, by shifting the fluid within the fluid channel into the opposite direction, i.e. away from the actuating element, the deformation of the actuating element is reversed (i.e. the elevation is abolished) due to a restoring force of the actuating element. Thus, in other words, a defined value or status of the taxel (e.g. the presence or absence of an elevation) can be provided by shifting the fluid within the fluid channel. The presence or absence of an elevation and thus the value of a taxel can be identified by touching the actuating element of the device. Further, by using a plurality of the devices according to the present invention, a plurality of taxels can be provided. Thereby, it is possible to represent, for example, a plurality of tactile characters and/or symbols.

According to a further aspect of the present invention, a tactile display is provided. The tactile display comprises:

- a plurality of fluid shifting devices according to the present invention, wherein the devices are arranged in a row or a matrix (the matrix comprising a plurality of rows and columns), and wherein each of the plurality of devices is connected to a (common) shift channel which provides fluid to each of the plurality of devices.

In particular, the common shift channel provides fluid to each fluid channel of the plurality of devices.

In a preferred embodiment, the tactile display further comprises a control unit for applying control signals to the electrodes of each of the plurality of devices. The control unit preferably comprises a processor and/or at least one voltage source. In particular, the at least one voltage source is connected with the at least one pair of electrodes of the devices.

In a further preferred embodiment, the tactile display further comprises a pump for pumping the fluid into (and preferably also out of) each fluid channel of the plurality of devices, wherein the pump is preferably a single syringe pump. In particular, the pump of the tactile display is a common pump for each of the devices.

In particular, the present invention provides a device for opening and closing of a channel suitable for conducting a fluid, the device comprising:

- a component made from a solid material

  -- having at least one chamber with at least two inlets
  -- having at least one pair of electrodes arranged such that they are in fluidic contact with said chamber
  -- the at least two inlets being shaped such that they form smaller cross-sections in the direct connection to the chamber

- an electrolyte filling said chamber and said at least two inlets and being in fluidic contact with said at least two electrodes,

  -- said electrolyte enclosing at least one fluid segment of a significantly higher surface energy such as, e.g. a liquid metal
  -- said at least one fluid segment of significantly higher surface energy being located inside of said chamber from which it cannot be removed by displacing said electrolyte via said inlets due to the positive capillary pressure exerted by said channel smaller cross-sections and the significantly higher surface energy
  -- said at least one fluid segment of significantly higher surface energy inside of said chamber acting as a fluidic sealing element blocking flow though said at least two inlets.

Opening the flow though said at least two inlets may be carried out by:

- applying a potential across said at least two electrodes in fluidic contact with said at least one fluid segment of significantly higher surface energy, thereby reducing the surface energy,
- thereby allowing said at least first fluid segment to be displaced within said chamber such that it does not seal said at least two inlets, thereby allowing a fluid movement through the chamber,
- thereby either circumventing said fluid segment while leaving it within said chamber or displacing it through one of said inlets out of the chamber.

Closing the flow through said inlets may be carried out by:

- removing said potential across said at least two electrodes in fluidic contact with said at least one fluid segment,
- thereby increasing its surface energy back to its initial value,
- thereby again sealing flow though the said at least two inlets.

According to a further aspect of the present invention, a method for shifting a fluid within a fluid channel by means of a control signal is provided. The fluid channel comprises at least one chamber, each chamber having at least two inlets and being filled with a fluid comprising an electrolyte, wherein each inlet has a cross-section which is smaller than a cross-section of the at least one chamber. In the absence of the control signal, a sealing control element, which is enclosed in the fluid of the fluid channel for sealing the at least one chamber and controlling a shift of the fluid within the fluid channel in response to the control signal is trapped in one of the at least one chamber due to an intrinsic (positive) capillary force, thereby sealing said one of the at least one chamber. In other words, in the absence of the control signal, the sealing control element cannot move out of the chamber. The sealing control element has a surface tension which is higher than a surface tension of the fluid. The method comprises:

- applying the control signal on or across a pair of electrodes being in fluidic contact with the at least one chamber (and thus with the sealing control element), thereby causing an electrocapillary force (and/or an electrocapillary pressure) acting on the sealing control element.

In a preferred embodiment, the applied control signal is configured such that the electrocapillary force (and/or pressure) caused by the control signal counteracts the intrinsic capillary force and is larger than the intrinsic capillary force so that the sealing control element at least partly moves out of the chamber in response to the control signal, thereby enabling a shift of the fluid within the fluid channel. In addition or alternatively, the applied control signal is configured such that it reduces a surface tension (and/or surface energy) of the sealing control element. In particular, in response to the control signal the wetting properties of the sealing control element may be changed. More specifically, in the absence of a control signal, the sealing control element is in a non-wetting state, and by applying the control signal the sealing control element is or changes to a wetting state.

In a further preferred embodiment, the shift of the fluid and/or a fluid segment occurs in a self-propelling manner, which may be due to (negative) capillary forces. The expression that the shift of the fluid and/or a fluid segment occurs "in a self-propelling manner" particularly means that the fluid and/or the fluid segment essentially moves by itself. Such a self-movement may be caused by a reduction of surface tension which reverts positive to negative capillary pressure. Alternatively or in addition, the shift of the fluid and/or a fluid segment occurs by pumping fluid into and/or out of the fluid channel. In particular, applying the control signal may cause that the sealing control element is displaced along a longitudinal axis of the fluid channel (i.e. along the actuation direction) from a first chamber to a second chamber (through an inlet which connects the first chamber and the second chamber). Alternatively, the sealing control element is displaced orthogonal to the longitudinal axis of the fluid channel (i.e. orthogonal to the actuation direction), thereby enabling the fluid to enter and/or pass the at least one chamber along the longitudinal axis of the fluid channel (i.e. in the actuation direction).

In a further preferred embodiment, the method comprises defining a taxel by shifting the fluid within the fluid channel. In particular, by shifting the fluid within the fluid channel, an actuating element (elastic membrane) is deformed, wherein the degree of deformation and/or the height of the deformed actuating element defines the taxel (more specifically a value or state of the taxel). Each taxel may have two values or states, namely "high" and "low" with respect to the degree of deformation and/or the height of the actuating element.

One of the advantages of the present invention is, that it even supports a grayscale representation, i.e., a taxel may have more than two values or states. This can be achieved, e.g., by providing more than two chambers. At least in one embodiment, the deformation grade of the actuation element depends on the position of the sealing control element within the fluid channel (actuator channel). Since a stable state is achieved when the sealing control element is located in one of the plurality of chambers, the deformation grade of the actuating element depends on in which chamber the sealing control element is located. In particular, the number of (stable) deformation grades of the actuation element may correspond to the number of chambers. Accordingly, the more chambers, the more (stable) deformation grades and thus the more values of a taxel. Thus, a preferred embodiment of the present invention, according to which the device or the fluid channel (actuator channel) comprises more than two chambers, not only supports a tactile black and white representation but also a tactile greyscale representation.

For the above mentioned further independent aspect and in particular for preferred embodiments in this regard, the explanations given above or below concerning the embodiments of the first aspect also hold true. In particular, for one independent aspect of the present invention and for preferred embodiments in this regard, the explanations given above and below concerning the embodiments of the respective other aspects also hold true.

Individual embodiments for solving the problem are described by way of example below with reference to the figures. In this case, the individual embodiments described have in part features which are not absolutely necessary for implementing the claimed subject matter, but which provide desired properties in specific applications. In this regard embodiments which do not have all the features of the embodiments described below are also intended to be regarded as disclosed in a manner coming under the technical teaching described. Furthermore, in order to avoid unnecessary repetitions, specific features are mentioned only with regard to individual embodiments from among the embodiments described below. It is pointed out that the individual embodiments are therefore intended to be considered not only by themselves but also in a joint consideration. On the basis of this joint consideration the person skilled in the art will recognize that individual embodiments can also be modified by inclusion of individual or a plurality of features of other embodiments. It is pointed out that a systematic combination of the individual embodiments with individual or a plurality of features described with regard to other embodiments may be desirable and expedient and is therefore intended to be taken into account and also to be regarded as encompassed by the description.

Brief description of the figures

The above and other objects, features and advantages of the present invention will become more apparent upon reading of the following description of preferred embodiments and accompanying drawings. Other features and advantages of the subject-matter described herein will be apparent from the description and the drawings and from the claims. It should be understood that even though embodiments are separately described, single features and functionalities thereof may be combined without prejudice to additional embodiments. The present disclosure is illustrated by way of example and not limited by the accompanying figures.

Preferred embodiments of the present invention are exemplarily described regarding the following figures:

**Figs. 1a-c**   shows schematic representations of a shift/gate actuator for which the present invention can be used;

**Figs. 2a-d**   show schematic representations of a device according to an exemplary embodiment of the present invention, wherein figures 2a to 2d illustrate different states of the device in order to describe the basic concept of the present invention;

**Fig. 2e**   shows a schematic representation of a tactile display according to an exemplary embodiment of the present invention;

**Fig. 3**   shows a diagram of capillary pressures in dependence of a capillary diameter in order to illustrate the fluid mechanical feasibility of the present invention;

**Figs. 4a-e**   show schematic representations of a device according to a preferred embodiment of the present invention, which is referred to as "ratched-lock mode", wherein figures 4a to 4e illustrate different states of the device;

**Figs. 5a-d**   show schematic representations of a device according to a further preferred embodiment of the present invention, which is referred to as "slide-lock mode", wherein figures 5a to 5d illustrate different states of the device;

**Figs. 6a-d**   show schematic representations of a device according to another exemplary embodiment of the "slide-lock mode", wherein figures 6a to 6d illustrate different states of the device;

**Fig. 7**   shows an overview of conventional actuator concepts for large-scale tactile displays using mechanical taxels in comparison with the concept according to the present invention, wherein properties that are met, fulfilled and/or suitable are marked with a checkmark and the properties which are not met, not fulfilled and/or not suitable are marked with a cross.

Detailed description of the figures

The following detailed description relates to exemplary embodiments of the present invention. Other embodiments of the invention are possible within the scope of the invention as defined by the appended claims. Throughout the figures, same reference signs are used for the same or similar elements.

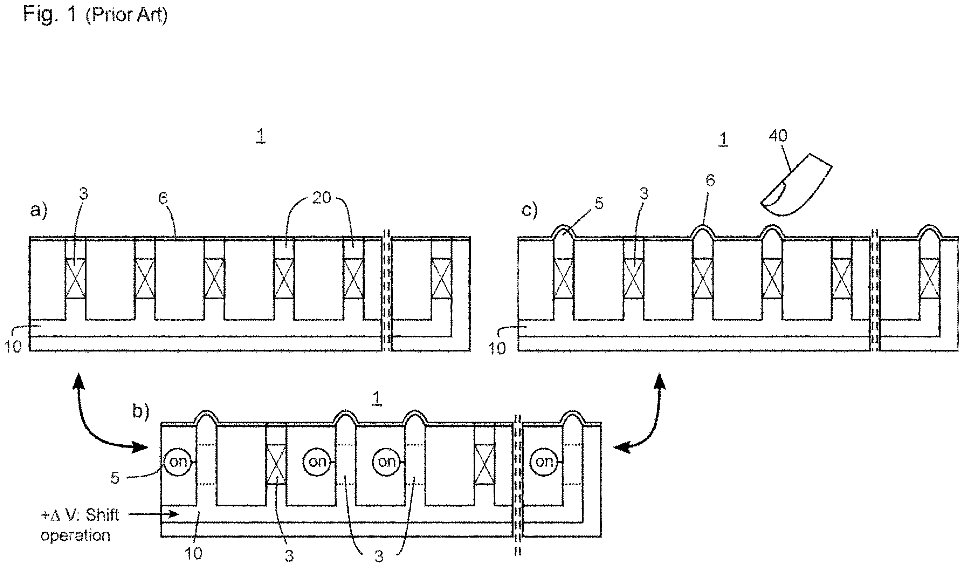

The present invention builds conceptually on a fundamental actuation concept which is described in WO 2013 139 418 A1 in connection with phase-change actuators. This fundamental actuation concept, which is referred to as "shift/gate actuation", is illustrated in Figs. 1a-c.

The shift/gate actuator concept follows one guiding principle: "It is not possible to integrate all suitable functions required for a microactuator into one component - so divide the function". In particular, the parameters which need to be balanced are

- large and controllable actuator stroke with a high driving force;
- bistability with a high holding force; and
- massive parallelization.

Instead of trying to integrate these properties into one device, the shift/gate actuator 1 as shown in Figs. 1a-c splits it up. The actuator 1 uses a microfluidic channel 10 (which is referred to as microfluidic shift channel). From this channel 10, several individual channels 20 (which are referred to as actuator channels) branch out, wherein the actuation channels 20 may be geometrically identical. In case of a tactile display, all these actuation channels 20 are closed by an elastic membrane 6. The shift channel 10 is connected to a powerful and finely controllable, but not miniaturized pump such as, e.g., a syringe pump (not explicitly shown in Figs. 1a to 1c but indicated by the "shift operation" and the arrow in Fig. 1b). Each of the actuator channels 20 can be sealed off by a single valve 3. These valves 3 act as gates (henceforth referred to as gates) to the shifting motion of the liquid in the shift channel 10. If liquid is pumped into the shift channel 10, only the actuators with an open gate 3 would be actuated. All other actuators would be sealed off and thus remain in the current position. Once actuated, the gates 3 are closed and the new actuator state is sealed off from the shift channel 10 again which can then be used to actuate a different set of actuators.

Thus, according to Fig. 1a, a microfluidic shift channel 10 operates several actuator channels 20 which are sealed by gates 3 (i.e., small valves). According to Fig. 1b, selectively opening some of these valves 3 allows a volume of liquid pumped into the shift channel 10 to penetrate into the actuator channels 20, thereby extending membranes 6 and thus actuating the actuator 1. According to Fig. 1c, closing the gates 3 locks the actuator 1 into a bistable state.

The basic operation principle cycles though these steps are:

a) Determine the actuators which need to be actuated;
b) Open the respective gates 3 of these actuators;
c) Pump the required amount of liquid into the shift channel 10 thus expanding all of the open-gate actuators in parallel, or pump liquid out of the shift channel 10 thus deleting taxels that have been set before;
d) Close the gates thus sealing the set position.

This concept enables all the stated requirements, namely:

- The actuator stroke can be large or small and is only dependent on the actuation of the (external) pump which supports (given that it is not miniaturized) significant driving force and very good control (down to only a few picoliters per stroke).
- The actuators are inherently bistable. Closing the gates will lock the current actuator state, irrespective of the set position. If the gates are tightly locked, the holding force can be substantial.
- This concept allows massive parallelization as virtually thousands of actuators can be set at the same time.

Up to now, the shift/gate actuator lacked one critical key item, namely a clever way of setting up a low-power, fast, scalable and easy-to-manufacture valve. As described in WO 2013 139 418 A1, liquid wax may be used, which is molten in the channel, thereby representing a gate: if the wax is solid, the gate is closed; if the wax is molten, the gate is open. This concept works, but phase-change actuators are very slow and very energy-intensive. The shift/gate actuator concept can thus only be used to its full potential, if a novel concept for realizing the gates was available. The present invention provides exactly this solution.

The present invention provides a fluid shifting device and particularly a novel actuator which allows massively parallelized, individually addressable actuator arrays suitable for, among others, graphical tactile displays. Within the present invention, this novel actuator is termed "Capillary Valve Actuator" and is based on capillarity, an effect intrinsic to microfluidics.

As already mentioned above, capillarity is the result of surface tension forces which define the ability (or inability) of a liquid to wet a material. Surface tension forces scale only linearly and capillary forces, being the only exception, increase when the length is scaled down. This makes capillarity extremely suitable for miniaturization. As also mentioned above, capillary microfluidics generally makes use of negative capillary pressure, i.e., the ability of microchannels to draw liquids in. The Capillary Valve Actuator as described within the present invention, however, use the inverse effect, i.e., positive capillary pressure which prevents liquid from penetrating into a microchannel. If liquid forms a (static) contact angle greater than 90° on a material, a microchannel made from this material will represent a barrier for the liquid. This is known, e.g., from liquid metal porosimetry, a technique which measures pore size distributions of rocks by pressing non-wetting liquids (usually liquid metals) into the void volumes. In these experiments positive capillarity pressures easily exceed several hundred bars. Given comparable dimensions, an engineered microchannel would act as a passive capillary barrier, e.g., a valve. By modulating the parameters which define capillary forces (surface tension of the liquid, free surface energy of the substrate and channel dimensions), a microchannel can be designed such that it has regions which act as capillary barriers, i.e., locations where the penetration of a liquid is stopped. Adding external triggers which change any of these parameters locally allows removing the capillary barrier thus opening the valve.

As capillary effects only occur at the air/liquid/solid-interface, the capillary barrier becomes ineffective once the liquid has fully penetrated into the channel. However, if the liquid is made up of discreet segments with different wetting properties, e.g., in form of a segmented flow, the effect can be repeated. For example, segmented flows may be implemented in microfluidics by (repeatedly) inserting one or more plugs of an immiscible liquid into a carrier liquid. As gravitational effects can be neglected in microfluidics (Bond numbers are usually very small), these plugs will remain stable even if the liquids have different densities.

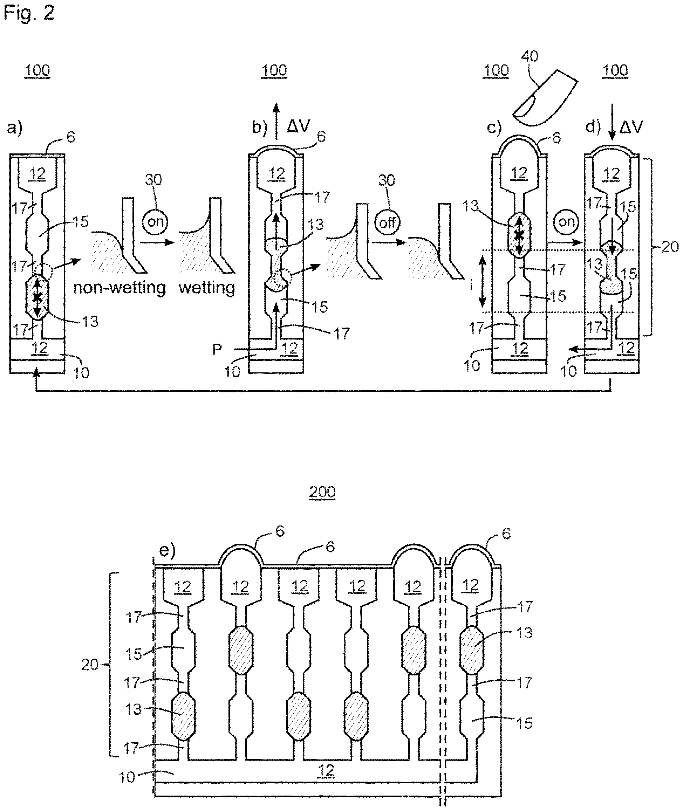

**Figs. 2a-d** show schematic representations of a device 100 according to an exemplary embodiment of the present invention. In the shown embodiment, the device 100 is an actuator device. However, it is to be understood that the principle concept of the present invention more generally relates to shifting a fluid within a fluid channel so that it is not necessary that the device 100 comprises all components essential for an actuator. Thus, although the device 100 may merely relate to a fluid shifting device, the basic concept of the present invention is described in view of using this concept for an actuator and particularly a tactile display.

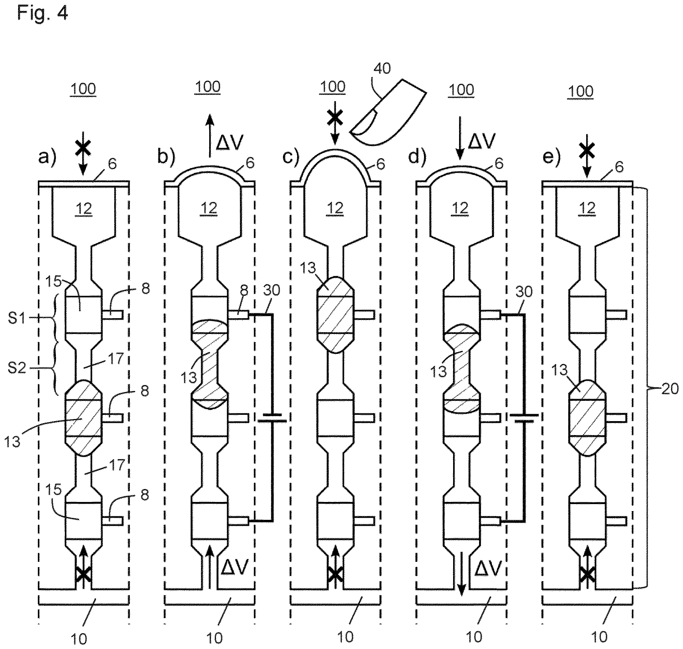

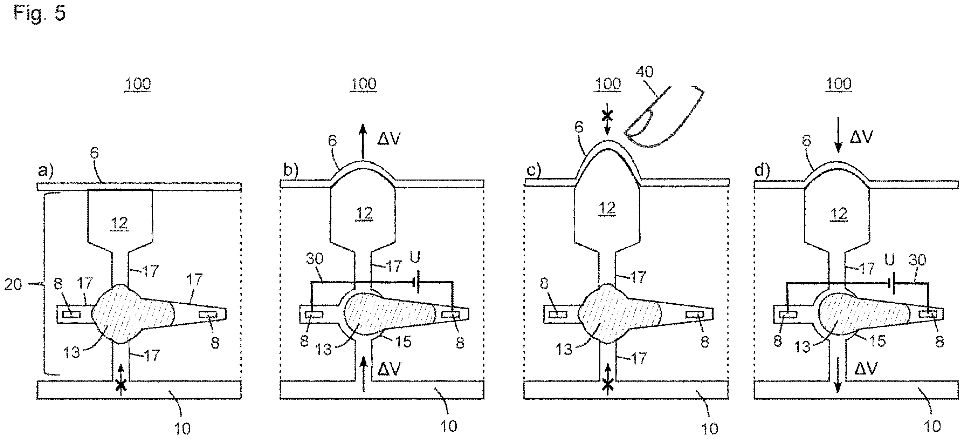

The fluid shifting device 100 comprises an actuation channel 20 comprising at least one chamber 15. Each chamber is filled with a fluid or carrier liquid 12 comprising an electrolyte and having at least two inlets 17. The carrier liquid 12 is provided by a shift channel 10 (also referred to as main channel). As shown in Fig. 2b, the carrier liquid 12 may be provided by pumping the liquid 12 from the shift channel 10 into the actuation channel 20. For this purpose, an (external) pump, which is indicated in Fig. 2b by reference sign P, may be used. Further, the device 100 comprises a sealing control element 13 being enclosed in the carrier liquid 12 of the actuation channel 20 for sealing the at least one chamber 15 and controlling a shift of the liquid 12 within the actuation channel 20 in response to a control signal 30. The status of the control signal 30, i.e., whether the control signal is switched on or off, is indicated in Figs. 2a-d by "on" and "off". The control signal is applied to at least one pair of electrodes which are not explicitly shown in Figs. 2a-d. The at least one pair of electrodes is arranged such that the electrodes are in fluidic contact with the at least one chamber 15 for causing, in response to the control signal 30, an electrocapillary force acting on the sealing control element 13, see Figs. 4a-e and 5a-d.

As can be seen from Figs. 2a-d, each inlet 17 has a cross-section which is smaller than a cross-section of the at least one chamber 15. Further, the sealing control element 13 has a surface tension which is higher than a surface tension of the carrier liquid 12, such that in the absence of the control signal 30 the sealing control element 13 is trapped in one of the at least one chamber 15 due to an intrinsic capillary force. In the embodiment shown in Figs. 2a-d, the device 100 comprises two chambers 15, wherein each chamber 15 has two inlets 17. In Fig. 2a, the sealing control element 13 is trapped in one of the two chambers 15 (namely in the lower one of the two chambers), and in Fig. 2c, the sealing control element 13 is trapped in the other one of the two chambers 15 (namely in the upper one of the two chambers). If the sealing control element 13 is located and/or trapped in one of the chambers 15, it seals the chamber in which it is located and/or trapped. In such a situation or state, the actuation channel 20 is closed, since no fluid or liquid can pass the sealed channel.

Moreover, the device 100 comprises an elastic membrane 6 which is arranged at an end portion of the device 100 and which seals a corresponding end portion of the actuation channel 20. The elastic membrane 6 serves as actuating element which is actuated by a shift of the fluid 12 within the actuation channel 20.

Each of figures 2a to 2d illustrates a distinct state of the device 100 in order to describe the basic principle of the present invention. In particular, the basic principle combines three components: capillary barriers (realized by inlets 17), external triggers (realized by control signal 30) and a segmented flow (realized by sealing control element 13). A single actuator 100 comprises an actuator channel 20 which is sealed with an elastic membrane 6. The actuator channel 20 branches off from one main microfluidic channel 10 from which and into which liquid 12 can be probed by a single (syringe) pump P (i.e., one pump operates all actuators 100). The actuator channel 20 is subdivided into discreet chambers 15 interconnected by capillary barriers 17. The chambers 15 are designed such that capillary forces are negligible, i.e., with larger diameters than the capillary barriers 17. Further, immiscible plugs 13 are inserted into the carrier liquid 12 thus forming a segmented flow. Each actuator channel 20 features one of these plugs 13 which are generated in a suitable microfluidic structure located further up along the main channel 10.

The sealing control element (immiscible plug) 13 is preferably made from a liquid with high surface tension and low viscosity. For example, liquid metals may be used as sealing control element 13 because liquid metals have high surface tensions (several 100 mN/m, at least an order of magnitude greater than water) and very low viscosities, usually in the range of water (a few mPa·s). This means that they will experience large positive capillary pressure when entering a microchannel, but once they penetrate the channel, they will flow readily due to their low viscosity.

Initially, the sealing control element 13 is located in the first chamber 15 along the actuator channel 20. It is trapped between the two capillary barriers 17 sealing the chamber 15. This is the stable off-state of the actuator 100 (membrane not deflected, 2a). The actuator is then switched by an external trigger (control signal 30) which locally changes the wetting behavior of the sealing control element 13 inside the capillary barrier 17 from non-wetting to wetting. As indicated by the sketches in Figs. 2a-d, the non-wetting behavior is characterized by a contact angle of $\theta > 90°$, and the wetting behavior is characterized by a contact angle of $\theta < 90°$. Due to this change in the wetting behavior of the sealing control element 13, the sealing control element 13 can enter the capillary barrier 17 and move from the first (lower) to the second (upper) chamber 15, see Fig. 2b, thereby shifting a volume $\Delta V$ of the fluid 12 within the fluid channel 20 and deforming the elastic membrane 6. By switching off the external trigger (control signal 30), the wetting behavior of the sealing control element 13 inside the capillary barrier 17 changes again from wetting to non-wetting. Hence, the sealing control element 13 is trapped in the second (upper) chamber 15, see Fig. 2c. In this stable on-state, the elastic membrane 6 is elongated and forms an elevation which is detectable by a finger 40. Accordingly, by means of the elastic membrane 6, a taxel can be defined and/or set, wherein the taxel has a distinct value (in form of a distinct height of the elastic membrane 6) as shown in Figs. 2a and 2c, respectively. When the external trigger (control signal 30) is switched on again, the wetting behavior of the sealing control element 13 inside the capillary barrier 17 changes again from non-wetting to wetting, thereby opening the capillary barrier 17 (gate) again (i.e. the sealing control element 13 can enter the capillary barrier 17 again). Due to the restoring force of the elongated elastic membrane 6, the sealing control element 13 moves from the second (upper) chamber to the first (lower) chamber, see Fig. 2d. Thereby, a volume $\Delta V$ of the fluid 12 is shifted within the fluid channel 20 (away from the elastic membrane 6), and the deformation of the elastic membrane 6 is reversed. In case that the restoring force of the membrane is not sufficient (which may be the case for small hubs), the pump may pump out a volume $\Delta V$ of the fluid 12 from the shift channel 10 and thus the fluid channel 20, i.e., a negative $\Delta V$ and thus a suction may be applied and/or caused by means of the pump. After switching off the external trigger (control signal 30), the stable off-state, as shown in Fig. 2a, is reached again.

In **Fig. 2e**, an arrangement of a plurality of devices 100 is shown, wherein each device 100 is in fluidic contact with a common shift channel 10. The plurality of devices 100 are arranged in a row or a matrix, thereby forming a tactile display 200. The tactile display 100 may be controlled by an external control unit. Alternatively, the tactile display 200 may comprise a control unit for applying control signals 30 to the electrodes 8 of each of the plurality of devices 100. Moreover, the tactile display may comprise a pump for pumping fluid 12 from the shift channel 10 into the actuator channels 20 of the actuators 100. As shown in Fig. 2e, each actuator device 100 can be controlled individually by means of a corresponding control signal (not explicitly shown in Fig. 2e), i.e., for each actuator device 100, a position of the sealing control element 13 within the actuator channel 20 can be adjusted individually. Depending on this position, each actuator 100 defines a distinct taxel value.

A change of the wetting behavior of the plug 13 inside the capillary barrier 17 from non-wetting to wetting (as illustrated in Figs. 2a-d) can be accomplished by several mechanisms, all of which change the surface tension forces in the carrier/plug/surface interface. In particular, two main effects can be used: continuous electrowetting (CEW) and electrowetting-on-dielectrics (EWOD). CEW and EWOD are two effects based on electrocapillarity (EC), i.e., the electrostatic control of the solid/fluid interfacial tension in a microchannel which induces an electrocapillary pressure (ECP) that eventually surpasses the positive capillary pressure (see Fig. 2b).

The capillary pressure $p_{CAP}$ can be calculated by

$$p_{CAP} = \frac{4\,\gamma\,\cos\theta}{d} \qquad \text{(Eq. 1)}.$$

In the above equation 1, $\gamma$ is the surface tension of a liquid (e.g. the plug or sealing control element 13), $d$ is the diameter of a capillary (e.g. the capillary barrier or inlet 17) and $\theta$ denotes the contact angle.

The electro capillary pressure $p_{ECP}$ on the other hand can be calculated by

$$p_{\text{ECP}} = \frac{\text{force}}{\text{area}} = \frac{l\,\Delta\gamma}{A} = \frac{l}{A}\frac{1}{2}\frac{\varepsilon_0\varepsilon_r}{d}V^2 \qquad \text{(Eq. 2)}.$$

In the above equation 2, $l$ is the length of the capillary (e.g. the capillary barrier or inlet 17), $d$ is the diameter of the capillary, $A$ is the cross-sectional area of the capillary, $V$ is the volume of the capillary, $\Delta\gamma$ is a change in the surface tension of a liquid (e.g. the plug or sealing control element 13), $\varepsilon_0$ is the vacuum permittivity and $\varepsilon_r$ is the relative permittivity of the liquid.

The most important quantity in both equations is the diameter of the microchannel $d$. Once the positive capillary pressure exceeds the holding pressure (i.e., the pressure exerted onto the actuator 100 and/or elastic membrane 6), the capillary barriers or gates 17 effectively fulfill their purpose. On the other hand, if during actuation, the electrocapillary pressure $p_{\text{ECP}}$ equals or exceeds the positive capillary pressure $p_{\text{CAP}}$, the gate can be opened.

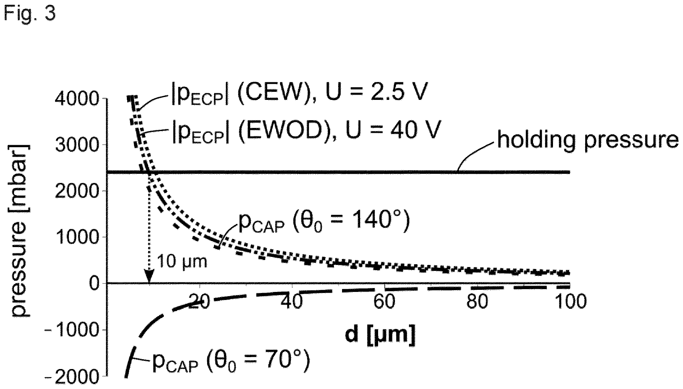

Fig. 3 shows the acting forces as a function of the channel diameter d as well as the required holding pressure during tactile reading. The positive capillary pressure $p_{\text{CAP}}$ and the electrocapillary pressure $p_{\text{ECP}}$ are calculated according to Eq. 1 and Eq. 2 for CEW and EWOD (50 nm parylene C as dielectric layer) using Galinstan as liquid. The electrocapillary pressure $p_{\text{ECP}}$ is shown in Fig. 3 as absolute values which acts in opposite direction to the positive capillary pressure $p_{\text{CAP}}$. The conversion from positive ($\theta_0$ = 140°, wetting angle of Galinstan on glass) to negative ($\theta_0$ = 70°) capillary pressure is shown for two static contact angles above and below 90°.

As can be seen in Fig. 3, below 10 $\mu$m channel diameter, the capillary gate is effective closed as the positive capillary pressure $p_{\text{CAP}}$ exceeds the forces on the actuator 100. Once the actuator 100 has a potential applied to the electrodes (both using CEW and EWOD), the electrocapillary pressure $p_{\text{ECP}}$ exceeds the positive capillary pressure $p_{\text{CAP}}$. In this case, the liquid metal plug 13 can be moved via pressure applied in the shift channel 10 over the capillary barrier 17 into the next discreet chamber 15, thereby displacing the actuator 100 by one actuator increment i (see Fig. 2c), bulging the membrane 6 and thus defining and/or setting the taxel. The external trigger 30 is then removed, the wetting behavior in the capillary barrier 17 switches back from wetting to non-wetting which again locks the plug 13 in place (Fig. 2c). This is the stable on-state of the actuator 100. Reversing to the off-state is performed by reversing this operation (Fig. 2d): The external trigger 30 removes the capillary barrier 17, the plug 13 moves (either self-propelling or driven by the relaxation force of the membrane 6 or suction applied via the pump P) back into the lower chamber 15 where it is again locked in place.

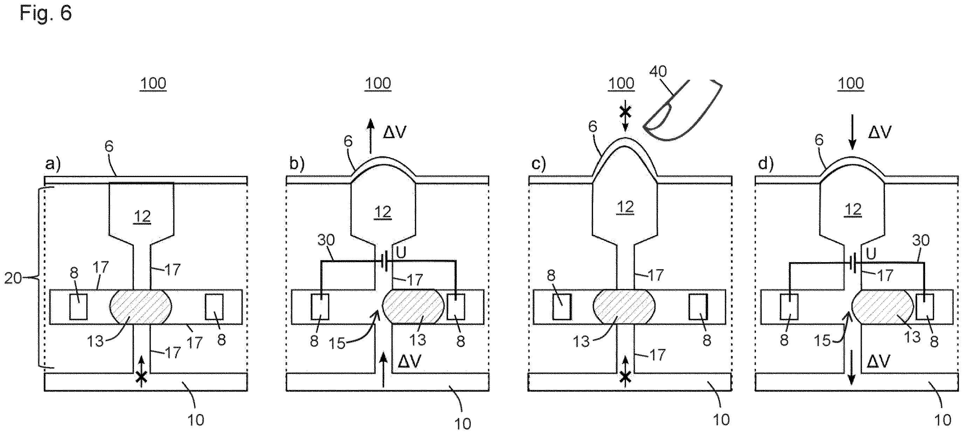

In the following, two main modes, referred to as "ratched-lock mode" and "slide-lock mode", of the actuator 100 are explained. While **Figs. 4a-e** illustrate the "ratched-lock mode", **Figs. 5a-d** and **Figs. 6a-d** illustrate the "slide-lock mode".

In the so-called ratchet-lock mode, as shown in **Figs. 4a-e**, the sealing control element 13 (e.g. a liquid metal) is moved along a fluid channel 20 which has a periodic structuring comprising segments S1 and S2 with low (S1) and high (S2) positive capillary pressure, the first segments S1 serving as discrete "ratchet chambers" (chambers 15) and the latter segments S2 serving as "capillary gates" (inlets 17).

Electrodes 8 are arranged such that an individually addressable set of electrodes can be operated to locally open a single capillary barrier or gate 17. In particular, a set of electrodes 8 is arranged such that they can actuate the liquid metal plug (sealing control element 13) across each of the capillary gates (inlets 17).

More specifically, as shown in Figs. 4a-e, the immiscible liquid metal plug 13 is entrapped in one of the ratchet chambers 15 located along the actuator channel 20. Ratchet chambers 15 are sections S1 of low positive capillary pressure along this actuator channel 20 intersected by sections S2 of high positive capillary pressure which act as a capillary gate. Electrodes 8 are arranged such that the liquid metal plug 13 can be moved across each barrier individually. The actuation proceeds from a common shift channel 10. If no electrodes 8 are actuated, i.e. if no control signal 30 (particularly a voltage) is applied to the electrodes 8, the liquid metal plug 13 is trapped and/or ratchet and cannot move, thus the taxel is set in its current position (see Fig. 4a according to which the sealing control element 13 is trapped in a second of three chambers). Opening one of the capillary gates by applying a control signal 30 across a pair of electrodes 8 opens one of the gates and allows a force and/or pressure applied via the shift channel 10 to move the sealing control element 13 and setting the taxel (see Fig. 4b according to which the sealing control element 13 moves through an inlet 17 from the second chamber to a third chamber). Removing the control signal 30 from the electrodes 8 again locks the taxel (see Fig. 4c according to which the sealing control element 13 is trapped in the third chamber). Resetting the taxel proceeds likewise due to the back-driving force and/or pressure exerted by the expanded membrane 6 (see Figs. 4d and 4e). Alternatively or in addition, resetting the taxel may be achieved in a self-propelling manner. Further alternatively or in addition, resetting the taxel may be achieved by pumping a distinct volume $\Delta$V of fluid 12 out of the shift channel 10 and thus out of the fluid channel 20, i.e. by a suction applied via the pump. That is, by applying a control signal 30 across a pair of electrodes 8 opens one of the gates again and allows a force and/or pressure caused by the expanded membrane 6 to move the sealing control element 13 back (e.g. from the third chamber to the second chamber, see Fig. 4d). Removing the control signal 30 from the electrodes 8 locks the taxel (see Fig. 4e according to which the sealing control element 13 is trapped again in the second chamber).

Thus, according to the embodiment shown in Figs. 4a-e, the device 100 comprises three chambers 15, wherein each chamber 15 has two inlets 17. In the absence of a control signal 30, the sealing control element or plug 13 is trapped in one of the three chambers 15. The sealing control element 13 and the control signal 30 are configured such that the surface tension of the sealing control element 13 is reduced in the presence of the control signal 30 and increased again to its previous value in the absence of the control signal 30. Thereby, the device 100 is configured to switch from a first stable state (e.g. an off- or on-state) to a second stable state (e.g. an on- or off-state) in response to the control signal 30. More specifically, in the ratchet-lock mode, the sealing control element 13 is displaced along a longitudinal axis of the fluid channel 20 from a first chamber to a second chamber in response to the control signal 30.

Although intuitively simpler to set up, the ratchet-lock configuration, as illustrated in Figs. 4a-e, is challenging to fabricate as the channel shaping needs to be distinctively precise and the control electronics is complex as many electrode pairs need to be actuated. In addition, the actuation channels 20 must be sufficiently long to accommodate the total volume required for taxel actuation which means, it must be sufficiently long. Given that a single taxel requires several microliters for maximum actuation, at the required small dimension of the microchannels, the actuation channel 20 must be several cm in length which makes the manufacturing of actuator arrays significantly more challenging.

In the so-called slide-lock mode, as shown in **Figs. 5a-d** and **Figs. 6a-d**, the liquid metal plug (sealing control element 13) operates perpendicular to the actuator channel 20 and seals it similarly to a sliding lock. The main actuation is performed by the same shift mechanism as in the ratchet-lock mode described above. However, in contrast to the ratchet-lock mode, the slide-lock configuration only requires the sealing control element 13 to move for very small distances and requires only one pair of electrodes 8 per actuator, thus making the whole configuration significantly simpler in setup compared to the ratchet-lock mode. In addition, the setting of taxels to arbitrary heights, e.g., for encoding greyscale, is very easy in this mode as the discrete positional locking of the ratchet mode does not apply here. In the ratchet mode, if a greyscale value is to be encoded, another ratchet chamber 15, a capillary barrier 17 as well as another set of electrodes 8 need to be added per discrete position of the taxel. The slide-lock mode is continuous as the positional setting of the taxel is controlled via the shift channel solely.

More specifically, as shown in Figs. 5a-d, at least a portion of the immiscible liquid metal plug 13 is attracted by and entrapped in a circular chamber 15 which has the electrodes 8 connected in two dead-end channels left and right. Due to the shaping of the channel, the liquid metal plug 13 is continuously pushed into the chamber 15 and thus seals the actuator channel 20. The shift channel 10 operates perpendicular to it. If the electrodes 8 are not actuated, i.e., if no control signal 30 (voltage U) is applied to the electrodes 8 (see Fig. 5a), the plug 13 seals the chamber 15 and thus locks the taxel. In Fig. 5a, the taxel is in a flat (off-)state. Applying a voltage U (control signal 30) across the electrodes 8 (see Fig. 5b) moves or withdraws the liquid metal 13 perpendicular to the fluid channel 20, thus moving it at least partly out of the way similarly to a sliding lock. This allows the pressure from the shift channel 10 to actuate the taxel. Removing the control signal 30 (voltage U) closes the chamber 15 and thus sets the taxel to an elongated (on-)state (see Fig. 5c). Resetting the taxel proceeds likewise. That is, by applying the control signal 30 across the electrodes 8 again (see Fig. 5d), moves or withdraws the liquid metal plug 13 perpendicular to the fluid channel 20, thereby moving the sealing control element 13 at least partly out of the chamber 15 similarly to a sliding lock. This allows the restoring force or pressure from the elastic membrane 6 to abolish the deformation or elongation of the membrane 6, thereby bringing the taxel to the flat (off-)state again. Alternatively or in addition, the deformation or elongation of the membrane 6 may be abolished in a self-propelling manner. Further alternatively or in addition, the deformation or elongation of the membrane 6 may be abolished by pumping a distinct volume $\Delta V$ of fluid 12 out of the shift channel 10 and thus out of the fluid channel 20, i.e. by a suction applied via the pump. Subsequently removing the control signal 30 (voltage U) closes the chamber 15 again and thus locks the taxel to the initial state (off-state) of Fig. 5a.

Although the chamber 15 has a circular shape in the example shown in Figs. 5a-d, the chamber 15 may alternatively have a different shape which is suitable to lock the fluid channel 20. For example, as illustrated in Figs. 6a-d, the chamber 15 may be formed as the crossing of the inlets 17. Accordingly, the chamber 15 may have a cruciform shape and/or a cruciform cross section. The device 100 of Figs. 6a-d works similar to the device 100 of Figs. 5a-d. If the electrodes 8 are not actuated, i.e., if no control signal 30 (voltage U) is applied to the electrodes 8 (see Fig. 6a), the plug 13 is attracted by the chamber 15 due to capillary forces. Due to its position in this state, the plug 13 seals the chamber 15 and thus locks the taxel. In Fig. 6a, the taxel is in a flat (off-)state. Applying a voltage U (control signal 30) across the electrodes 8 (see Fig. 6b) moves or withdraws the liquid metal 13 perpendicular to the fluid channel 20, thus moving it at least partly out of the way similarly to a sliding lock. This allows the pressure from the shift channel 10 to actuate the taxel. By removing the control signal 30 (voltage U), the plug 13 moves back to the crossing of the inlets 17 and closes the chamber 15, thereby setting the taxel to an elongated (on-)state (see Fig. 6c). Resetting the taxel proceeds likewise. That is, by applying the control signal 30 across the electrodes 8 again (see Fig. 6d), moves or withdraws the liquid metal plug 13 perpendicular to the fluid channel 20, thereby moving the sealing control element 13 at least partly out of the chamber 15 similarly to a sliding lock. This allows the restoring force or pressure from the elastic membrane 6 to abolish the deformation or elongation of the membrane 6, thereby bringing the taxel to the flat (off-)state again.

Alternatively or in addition, the deformation or elongation of the membrane 6 may be abolished in a self-propelling manner. Further alternatively or in addition, the deformation or elongation of the membrane 6 may be abolished by pumping a distinct volume ΔV of fluid 12 out of the shift channel 10 and thus out of the fluid channel 20, i.e. by a suction applied via the pump. Subsequently removing the control signal 30 (voltage U) closes the chamber 15 again and thus locks the taxel to the initial state (off-state) of Fig. 6a.

Thus, according to the embodiment shown in either Figs. 5a-d or Figs. 6a-d, the device 100 comprises only one chamber 15 having at least two inlets 17. In the absence of a control signal 30, at least a portion of the sealing control element 13 is trapped in said chamber 15. The sealing control element 13 and the control signal 30 are configured such that the surface tension of the sealing control element 13 is reduced in the presence of the control signal 30 and increased again to its previous value in the absence of the control signal 30. Thereby, the device 100 is configured to switch from a first stable state (e.g. an off- or on-state) to a second stable state (e.g. an on- or off-state) in response to the control signal 30. More specifically, in the slide-lock mode, the sealing control element 13 is displaced orthogonal to the longitudinal axis of the fluid channel 20 in response to the control signal 30, thereby enabling the fluid 12 to enter and/or pass the chamber 15 along the longitudinal axis of the fluid channel 20.

In the following, further features, properties and/or advantages of an actuator which is based on the concept according to the present invention compared to conventional actuators are pointed out.

The relevant scientific state-of-the-art is the field of microactuators. However, many of the required properties are problematic for classical microactuators. A 1.4 mm pitch which is required for tactile displays is significantly smaller than the lateral size of most microactuators. Even if the core components of microactuators are microscopic in scale, they often require bulky external components (magnets, springs, fixtures) making them unsuitable for high-density integration. Additionally, many microactuators do not support a 100 mN holding force, as required for tactile displays, and actuator strokes in the range of 0.5 mm are challenging. If a bistable (latchable) microactuator is sought, the choice is further restricted. In terms of high-density integration, many actuators suffer from the fact that they require hybrid manufacturing processes, manual assembly or specialized and expensive materials. Even if an actuator allows dense integration the required bulky external components, e.g., for generating high magnetic or electric fields, prevent it.

In general, current state-of-the-art microactuators always compromise between the most important parameters: actuator stroke, stability, integration density, costs and lateral size. In improving one property, one usually degrades another. As an example, if the actuator stroke must be increased, stronger and bulkier components usually have to be used, thus increasing size and decreasing integration density. The only microactuators for which high-density integration has been demonstrated are the electrostatic actuators which drive digital micromirror devices (DMDs). However, these actuators only achieve a few μm of actuator stroke and possess virtually no holding force. Moreover, microfluidics large-scale integration (MLSI) based on pneumatic membrane valves developed by the Quake group has been discussed as an option for tactile displays, see M. A. Unger, H. P. Chou et al., Science, 288, 113 (2000), and T. Thorsen, S. J. Maerkl et al., Science, 298, 580 (2002). However, MLSI is designed as microfluidic valve platform which miniaturizes only the actual valve but not the actuator itself. The Quake valves require macroscopic external pneumatic valves for actuation. Additionally, in order to reduce the number of pneumatic valves, MLSI makes use of (de-)multiplexing concepts which does not allow setting the on-chip valves individually and in parallel. Further, thermal actuator arrays with up to 588 individually addressable as well as bistable valves based on phase-change materials have been developed, see C. Richter, K. Sachsenheimer et al., Microfluid. Nanofluid., 20, 130 (2016). However these concepts were too slow for the use in tactile displays.

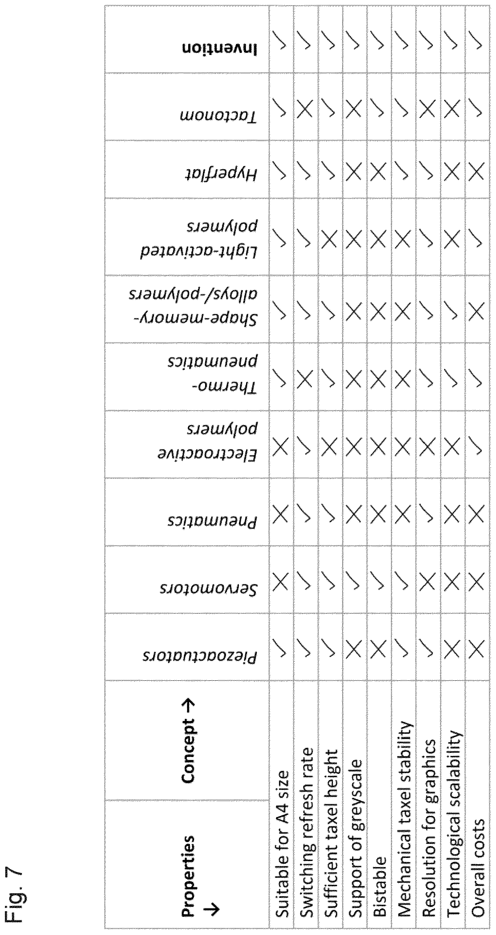

**Fig. 7** lists noteworthy attempts for setting up tactile displays by using known microactuator concepts. Piezoactuators have been among the first actuators used for tactile displays, see H. Hernandez, E. Preza et al., Electronics, Robotics and Automotive Mechanics Conference, 2009. CERMA'09., 402 (2009). Even though they are the de facto standard in commercial Braille lines and tactile displays, they are too expensive, not bistable and thus unsuitable for mobile tactile displays. Similar to MLSI, pneumatic actuation prohibits dense integration and usually yields taxels of insufficient mechanical stability, see X. Wu, H. Zhu et al., TRANSDUCERS 2007-2007 International Solid-State Sensors, Actuators and Microsystems Conference, 1409 (2007). Electroactive polymers which make use of the piezoelectric properties of certain polymers have been studied as an alternative means to generate taxel actuators. However, due to fact that they require extremely high electric fields, they have proven unsuitable for high-density integration, see H. S. Lee, H. Phung et al., Sensors and Actuators A: Physical, 205, 191 (2014). Actuators based on thermopneumatic actuators yield taxels of inferior mechanical stability as do shape-memory alloys and shape-memory polymers, see J. S. Lee und S. Lucyszyn, Journal of Microelectromechanical Systems, 14, 673 (2005) and T. Matsunaga, K. Totsu et al., Displays, 34, 89 (2013). Usage of light-activated polymers is a relatively recent approach which promises good scalability in costs but only achieves taxels heights in the range of a few tens of μm, see N. Torras, K. Zinoviev et al., Sensors and Actuators A: Physical, 208, 104 (2014). Another option is the usage of magnetic fields for setting taxels which is the approach taken by the "Tactonom" system. However, magnetic fields are difficult to generate in a locally confined manner and the system therefore sets taxel-by-taxel individually which makes it slow and non-portable.

Moreover, there have been several accounts on non-mechanical actuators based on vibration, heat, local changes in the friction coefficient as well as by application of current directly to the human finger. However, all of these actuation mechanisms cannot be detected by the human sense at a resolution sufficient for tactile reading. The resolution of the human finger to touch is orders of magnitude higher. Additionally, electrical and thermal actuation stimulates pain in the fingers, see K. A. Kaczmarek, J. G. Webster et al., IEEE Trans. Biomed. Eng., 38, 1 (1991).

There have also been attempts to design a "static" large-scale tactile display by having a small number of mechanical actuators on a computer mouse which moves over a page and sets the taxels according to information processed via a CCD chip, see N. Rajaei, M. Ohka et al., International Journal of Advanced Robotic Systems, 13, 1729881416658170 (2016). During this process, the human finger remains static and does not "explore" the page by movement. Although significantly simpler to set up, the tactile readability in these systems is notoriously bad as the human tactile perception requires the sliding motion, see A. Russomanno, S. O'Modhrain et al., IEEE Trans. Haptics, 8, 287 (2015). Also, this approach does not "explore" a page with all ten fingers in parallel, which is desired, see E. Wilhelm, A. Voigt et al., MULTIsensory Interaction and Assitive Technology, Madeira, Portugal (2015).

Thus, as shown in Fig. 7, each of the conventional actuator concepts has drawbacks so that these conventional actuator concepts do not provide all properties that are required for a tactile display. With the concept provided within the present invention, however, these drawbacks have been overcome.

In particular, an actuator which is based on the concept of the present invention may have a number of unique features which make it a ground-breaking novel concept for fundamental research and specifically for large-scale tactile displays:

- The actuator is bistable. Its stability is based entirely on fluid physics, i.e., no springs, sealing elements, magnets, coils or the like are required.
- The taxel is mechanically very stable as the positive capillary pressure supports forces above 100 mN.
- As the actuator is bistable, energy is required solely for switching the state. The energy required for electrocapillary actuation is very low, usually in in the range of several $\mu$W.
- The actuator comprises a passive microfluidic channel or channel network and has no movable mechanical components.
- The actuator has a small footprint and can thus be integrated densely at resolutions sufficient for tactile graphic displays (1.4 mm spacing).
- If chosen correctly, the external triggers can be operated by low voltage control signals. CEW requires voltages of less than 5 V, EWOD requires higher voltages.
- The number of actuators can be very high, since addressing thousands of triggers by low-voltage control signals is simple to implement.
- Many actuators can be set at the same time, since the displacement of the sealing control element is either self-propelling or many sealing control elements can be displaced in parallel by a single (syringe) pump (see Fig. 2e).
- The actuator is fast: The latency between the application of an electric field and the induction of flow in CEW and EWOD is in the range of a few milliseconds. Flow rates of several centimeters per second can be reached when electrocapillary-driven.
- Actuator arrays scale very well in cost: Each additional actuator only adds another actuator channel, the cost for the plug material and a digital control channel resulting in only a few Eurocents per actuator.
- The actuator can support different strokes by adding additional chambers along the actuator channel which allows displacing the actuator over various increments. For tactile displays, this allows "encoding greyscale values" by means of different taxel heights.

**List of Reference Numerals**

| | |
|---|---|
| 1 | shift/gate actuator |
| 3 | gate (valve) |
| 5 | actuator chamber |
| 6 | elastic membrane (actuating element) |
| 8 | electrode |
| 10 | main channel (shift channel) |
| 12 | carrier liquid (fluid) |
| 13 | immiscible plug (sealing control element) |
| 15 | chamber |
| 17 | capillary barrier (inlet) |
| 20 | actuation channel (fluid channel) |

| 30 | control signal |
| 40 | finger |
| 100 | actuator (device) |
| 200 | array of actuators (tactile display) |
| i | increment |
| P | pump |
| S1 | first segment |
| S2 | second segment |
| U | voltage (control signal) |
| ΔV | voltage difference due to shift operation (shift volume) |

**Claims**

1. A fluid shifting device (100) comprising:

   - a fluid channel (20) comprising at least one chamber (15), each chamber (15) being filled with a fluid (12) comprising an electrolyte and having at least two inlets (17), wherein each inlet (17) has a cross-section which is smaller than a cross-section of the at least one chamber (15);
   - a sealing control element (13) being enclosed in the fluid (12) of the fluid channel (20) for sealing the at least one chamber (15) and controlling a shift of the fluid (12) within the fluid channel (20) in response to a control signal (30); and
   - at least one pair of electrodes (8) arranged such that the electrodes (8) are in fluidic contact with the at least one chamber (15) for causing, in response to the control signal (30), an electrocapillary force acting on the sealing control element (13);

   wherein the sealing control element (13) has a surface tension which is higher than a surface tension of the fluid (12), such that in the absence of the control signal (30) at least a portion of the sealing control element (13) is trapped in one of the at least one chamber (15) due to an intrinsic capillary force, thereby sealing said one of the at least one chamber (15).

2. The device (100) according to claim 1, wherein the sealing control element (13) is a fluid segment which is immiscible with the fluid (12).

3. The device (100) according to any one of the preceding claims, wherein the device (100) is configured to switch from a first stable state to a second stable state in response to the control signal (30), wherein the sealing control element (13) and the control signal (30) are configured such that the surface tension of the sealing control element (13) is reduced in the presence of the control signal (30), and increased again to its previous value in the absence of the control signal (30).

4. The device (100) according to any one of the preceding claims, wherein in response to the control signal (30),

   the sealing control element (13) is displaced along a longitudinal axis of the fluid channel (20) from a first chamber to a second chamber, or
   the sealing control element (13) is displaced orthogonal to the longitudinal axis of the fluid channel (20), thereby enabling the fluid (12) to enter and/or pass the at least one chamber (15) along the longitudinal axis of the fluid channel (20).

5. The device (100) according to any one of the preceding claims, further comprising:

   - a pump (P) for pumping fluid into the fluid channel (20).

6. The device (100) according to any one of the preceding claims,

   wherein an end portion of the fluid channel (20) is sealed with an elastic membrane (6), and
   wherein particularly the elastic membrane (6) is an actuating element, the fluid channel (20) is an actuator channel and the device (100) is a bistable actuator.

7. Use of the device (100) according to any one of the preceding claims for a tactile display (200), wherein a taxel is defined by shifting the fluid (12) within the fluid channel (20).

8. A tactile display (200) comprising:

- a plurality of devices (100) according to any one of claims 1 to 6, wherein the devices (100) are arranged in a row or a matrix, and wherein each of the plurality of devices (100) is in fluidic contact with a shift channel (10) which provides fluid (12) to each of the plurality of devices (100).

9. The tactile display (200) according to claim 8, further comprising:

- a control unit for applying control signals (30) to the electrodes (8) of each of the plurality of devices (100).

10. The tactile display (200) according to claim 8 or 9, further comprising

- a pump (P) for pumping the fluid (12) into each fluid channel (20) of the plurality of devices (100), wherein the pump (P) is preferably a single syringe pump.

11. A method for shifting a fluid (12) within a fluid channel (20) by means of a control signal (30), wherein the fluid channel (20) comprises at least one chamber (15), each chamber (15) having at least two inlets (17) and being filled with a fluid (12) comprising an electrolyte, wherein each inlet (17) has a cross-section which is smaller than a cross-section of the at least one chamber (15), and wherein, in the absence of the control signal (30), at least a portion of a sealing control element (13) being enclosed in the fluid (12) of the fluid channel (20) for sealing the at least one chamber (15) and controlling a shift of the fluid (12) within the fluid channel (20) in response to the control signal (30) is trapped in one of the at least one chamber (15) due to an intrinsic capillary force, thereby sealing said one of the at least one chamber (15), wherein the sealing control element (13) has a surface tension which is higher than a surface tension of the fluid (12), the method comprising:

- applying the control signal (30) on or across a pair of electrodes (8) being in fluidic contact with the at least one chamber (15), thereby causing an electrocapillary force acting on the sealing control element (13).

12. The method according to claim 11,

wherein the applied control signal (30) is configured such that the electrocapillary force caused by the control signal (30) counteracts the intrinsic capillary force and is larger than the intrinsic capillary force so that the sealing control element (13) at least partly moves out of said one of the least one chamber (15) in response to the control signal (30), thereby enabling a shift of the fluid (12) within the fluid channel (20), and/or
wherein the applied control signal (30) is configured such that it reduces a surface tension of the sealing control element (13).

13. The method according to claim 11 or 12, wherein the shift of the fluid (12) occurs in a self-propelling manner and/or by pumping fluid (12) into and/or out of the fluid channel (20).

14. The method according to any one of claims 11 to 13, further comprising

- defining a taxel by shifting the fluid (12) within the fluid channel (20).

**Patentansprüche**

1. Eine Fluidverschiebungsvorrichtung (100), die Folgendes umfasst:

- einen Fluidkanal (20), der mindestens eine Kammer (15) umfasst, wobei jede Kammer (15) mit einem Fluid (12) gefüllt ist, das einen Elektrolyten umfasst, und mindestens zwei Einlässe (17) aufweist, wobei jeder Einlass (17) einen Querschnitt aufweist, der kleiner als ein Querschnitt der mindestens einen Kammer (15) ist;
- ein Dichtungssteuerelement (13), das vom Fluid (12) des Fluidkanals (20) umschlossen ist, um die mindestens eine Kammer (15) abzudichten und in Reaktion auf ein Steuersignal (30) eine Verschiebung des Fluids (12) innerhalb des Fluidkanals (20) zu steuern; und

- mindestens ein Paar Elektroden (8), die so angeordnet sind, dass die Elektroden (8) in Fluidkontakt mit der mindestens einen Kammer (15) stehen, um in Reaktion auf das Steuersignal (30) eine elektrokapillare Kraft zu bewirken, die auf das Dichtungssteuerelement (13) wirkt;

wobei das Dichtungssteuerelement (13) eine Oberflächenspannung aufweist, die höher ist als eine Oberflächenspannung des Fluids (12), sodass in Abwesenheit des Steuersignals (30) mindestens ein Teil des Dichtungssteuerelements (13) in einer der mindestens einen Kammer (15) aufgrund einer intrinsischen Kapillarkraft eingeschlossen bzw. gefangen ist (*trapped*), wodurch die genannte eine der mindestens einen Kammer (15) abgedichtet wird.

2. Die Vorrichtung (100) nach Anspruch 1, wobei das Dichtungssteuerelement (13) ein Fluidsegment ist, das mit dem Fluid (12) unmischbar ist.

3. Die Vorrichtung (100) nach irgendeinem der vorstehenden Ansprüche, wobei die Vorrichtung (100) konfiguriert ist, um in Reaktion auf das Steuersignal (30) von einem ersten stabilen Zustand in einen zweiten stabilen Zustand umzuschalten, wobei das Dichtungssteuerelement (13) und das Steuersignal (30) so konfiguriert sind, dass die Oberflächenspannung des Dichtungssteuerelements (13) bei Anwesenheit des Steuersignals (30) verringert und bei Abwesenheit des Steuersignals (30) wieder auf ihren vorherigen Wert erhöht wird.

4. Die Vorrichtung (100) nach irgendeinem der vorstehenden Ansprüche, wobei in Reaktion auf das Steuersignal (30)

das Dichtungssteuerelement (13) entlang einer Längsachse des Fluidkanals (20) von einer ersten Kammer zu einer zweiten Kammer verschoben wird, oder
das Dichtungssteuerelement (13) orthogonal zur Längsachse des Fluidkanals (20) verschoben wird, wodurch es dem Fluid (12) ermöglicht wird, entlang der Längsachse des Fluidkanals (20) in die mindestens eine Kammer (15) einzutreten und/oder diese zu passieren.

5. Die Vorrichtung (100) nach irgendeinem der vorstehenden Ansprüche, die ferner Folgendes umfasst:

- eine Pumpe (P) zum Pumpen von Fluid in den Fluidkanal (20).

6. Die Vorrichtung (100) nach irgendeinem der vorstehenden Ansprüche, wobei ein Endabschnitt des Fluidkanals (20) mit einer elastischen Membran (6) verschlossen ist, und
wobei insbesondere die elastische Membran (6) ein Betätigungselement ist, der Fluidkanal (20) ein Betätigungskanal ist und die Vorrichtung (100) ein bistabiles Betätigungselement ist.

7. Eine Verwendung der Vorrichtung (100) nach irgendeinem der vorstehenden Ansprüche für eine taktile Anzeige (200), wobei ein Taxel durch Verschieben des Fluids (12) im Fluidkanal (20) definiert ist.

8. Eine taktile Anzeige (200), die Folgendes umfasst:

- eine Vielzahl von Vorrichtungen (100) nach irgendeinem der Ansprüche von 1 bis 6, wobei die Vorrichtungen (100) in einer Reihe oder einer Matrix angeordnet sind, und wobei jede der Vielzahl von Vorrichtungen (100) in Fluidkontakt mit einem Verschiebungskanal (10) steht, der jeder der Vielzahl von Vorrichtungen (100) Fluid (12) zuführt.

9. Die taktile Anzeige (200) nach Anspruch 8, die ferner Folgendes umfasst:

- eine Steuereinheit zum Anlegen von Steuersignalen (30) an die Elektroden (8) einer jeden der Vielzahl von Vorrichtungen (100).

10. Die taktile Anzeige (200) nach Anspruch 8 oder 9, die ferner Folgendes umfasst:

- eine Pumpe (P) zum Pumpen des Fluids (12) in jeden Fluidkanal (20) der Vielzahl von Vorrichtungen (100), wobei die Pumpe (P) vorzugsweise eine einzelne Spritzenpumpe ist.

11. Ein Verfahren zum Verschieben eines Fluids (12) innerhalb eines Fluidkanals (20) mittels eines Steuersignals (30), wobei der Fluidkanal (20) mindestens eine Kammer (15) umfasst, wobei jede Kammer (15) mindestens zwei Einlässe (17) aufweist und mit einem Fluid (12) gefüllt ist, das einen Elektrolyten umfasst, wobei jeder Einlass (17) einen Querschnitt aufweist, der kleiner ist als ein Querschnitt der mindestens einen Kammer (15), und wobei in Abwesenheit des Steuersignals (30), zumindest ein Teil eines Dichtungssteuerelements (13), das vom Fluid (12) des Fluidkanals (20) umschlossen ist, um die mindestens eine Kammer (15) abzudichten und eine Verschiebung des Fluids (12) innerhalb des Fluidkanals (20) in Reaktion auf das Steuersignal (30) zu steuern, in einer der mindestens einen Kammer (15) aufgrund einer intrinsischen Kapillarkraft eingeschlossen bzw. gefangen ist (*trapped*), wodurch die genannte eine von der mindestens einen Kammer (15) abgedichtet wird, wobei das Dichtungssteuerelements (13) eine Oberflächenspannung aufweist, die höher ist als eine Oberflächenspannung des Fluids (12), wobei das Verfahren umfasst:

- Anlegen des Steuersignals (30) an oder zwischen (*on or across*) ein Paar von Elektroden (8), die in Fluidkontakt mit der mindestens einen Kammer (15) stehen, wodurch eine elektrokapillare Kraft bewirkt wird, die auf das Dichtungssteuerelement (13) wirkt.

**12.** Das Verfahren nach Anspruch 11,

wobei das angelegte Steuersignal (30) so konfiguriert ist, dass die durch das Steuersignal (30) verursachte elektrokapillare Kraft der intrinsischen Kapillarkraft entgegenwirkt und größer ist als die intrinsische Kapillarkraft, sodass sich das Dichtungssteuerelement (13) als Reaktion auf das Steuersignal (30) zumindest teilweise aus der genannten einen der mindestens einen Kammer (15) herausbewegt, wodurch eine Verschiebung des Fluids (12) innerhalb des Fluidkanals (20) ermöglicht wird, und/oder
wobei das angelegte Steuersignal (30) so konfiguriert ist, dass es eine Oberflächenspannung des Dichtungssteuerelements (13) verringert.

**13.** Das Verfahren nach Anspruch 11 oder 12, wobei die Verschiebung des Fluids (12) selbsttreibend und/oder durch Pumpen von Fluid (12) in den und/oder aus dem Fluidkanal (20) erfolgt.

**14.** Das Verfahren nach irgendeinem der Ansprüche von 11 bis 13, das ferner Folgendes umfasst:

- Definieren eines Taxels durch Verschieben des Fluids (12) innerhalb des Fluidkanals (20).

## Revendications

**1.** Un dispositif de déplacement de fluide (100) comprenant :

- un canal de fluide (20) comprenant au moins une chambre (15), chaque chambre (15) étant remplie d'un fluide (12) comprenant un électrolyte et présentant au moins deux entrées (17), sachant que chaque entrée (17) présente une section transversale inférieure à une section transversale de la au moins une chambre (15) ;
- un élément de commande de scellement (13) enfermé dans le fluide (12) du canal de fluide (20) pour sceller l'au moins une chambre (15) et commander un déplacement du fluide (12) à l'intérieur du canal de fluide (20) en réponse à un signal de commande (30) ; et
- au moins une paire d'électrodes (8) agencée de manière que les électrodes (8) soient en contact fluidique avec la au moins une chambre (15) pour provoquer, en réponse au signal de commande (30), une force électrocapillaire agissant sur l'élément de commande de scellement (13) ;

sachant que l'élément de commande de scellement (13) présente une tension superficielle supérieure à une tension superficielle du fluide (12), de manière qu'en l'absence du signal de commande (30), au moins une partie de l'élément de commande de scellement (13) est piégée dans l'une des au moins une chambre (15) en raison d'une force capillaire intrinsèque, ce qui permet de sceller ladite une des au moins une chambre (15).

**2.** Le dispositif (100) d'après la revendication 1, sachant que l'élément de commande de scellement (13) est un segment de fluide non miscible avec le fluide (12).

**3.** Le dispositif (100) d'après l'une quelconque des revendications précédentes, sachant que le dispositif (100) est configuré pour commuter d'un premier état stable à un deuxième état stable en réponse au signal de commande (30), l'élément de commande de scellement (13) et le signal de commande (30) étant configurés pour que la tension superficielle de l'élément de commande de scellement (13) soit réduite en présence du signal de commande (30), et augmentée à nouveau jusqu'à sa valeur précédente en l'absence du signal de commande (30).

4. Le dispositif (100) d'après l'une quelconque des revendications précédentes, sachant qu'en réponse au signal de commande (30),

l'élément de commande de scellement (13) est déplacé le long d'un axe longitudinal du canal de fluide (20), depuis une première chambre jusqu'à une deuxième chambre, ou que
l'élément de commande de scellement (13) est déplacé orthogonalement à l'axe longitudinal du canal de fluide (20), permettant ainsi au fluide (12) d'entrer dans et/ou de traverser la au moins une chambre (15) le long de l'axe longitudinal du canal de fluide (20).

5. Le dispositif (100) d'après l'une quelconque des revendications précédentes, comprenant en outre :

- une pompe (P) pour pomper du fluide dans le canal de fluide (20).

6. Le dispositif (100) d'après l'une quelconque des revendications précédentes,

sachant qu'une portion d'extrémité du canal de fluide (20) est scellée par une membrane élastique (6), et sachant que notamment la membrane élastique (6) est un élément d'actionnement, le canal de fluide (20) est un canal d'actionnement et le dispositif (100) est un actionneur bistable.

7. Une utilisation du dispositif (100) d'après l'une quelconque des revendications précédentes pour un écran tactile (200), sachant qu'un taxel est défini en déplaçant le fluide (12) à l'intérieur du canal de fluide (20).

8. Un afficheur tactile (200) comprenant :

- une pluralité de dispositifs (100) d'après l'une quelconque des revendications de 1 à 6, sachant que les dispositifs (100) sont agencés en ligne ou en matrice, et sachant que chacun de la pluralité de dispositifs (100) est en contact fluidique avec un canal de déplacement (10) qui fournit du fluide (12) à chacun de la pluralité de dispositifs (100).

9. L'afficheur tactile (200) d'après la revendication 8, comprenant en outre :

- une unité de commande pour appliquer des signaux de commande (30) aux électrodes (8) de chacun de la pluralité de dispositifs (100).

10. L'afficheur tactile (200) d'après la revendication 8 ou 9, comprenant en outre :

- une pompe (P) pour pomper le fluide (12) dans chaque canal de fluide (20) de la pluralité de dispositifs (100), sachant que la pompe (P) est de préférence une pompe à seringue unique.

11. Un procédé pour déplacer un fluide (12) à l'intérieur d'un canal de fluide (20) au moyen d'un signal de commande (30), sachant que le canal de fluide (20) comprend au moins une chambre (15), chaque chambre (15) présentant au moins deux entrées (17) et étant remplie d'un fluide (12) comprenant un électrolyte, sachant que chaque entrée (17) présente une section transversale inférieure à une section transversale de la ou des chambres (15), et sachant que, en l'absence du signal de commande (30), au moins une partie d'un élément de commande de scellement (13), étant enfermé dans le fluide (12) du canal de fluide (20) pour sceller la au moins une chambre (15) et commander un déplacement du fluide (12) dans le canal de fluide (20) en réponse au signal de commande (30), est piégé dans l'une de la ou des chambres (15) en raison d'une force capillaire intrinsèque, scellant ainsi ladite une parmi la ou les chambres (15), sachant que l'élément de commande de scellement (13) présente une tension superficielle qui est supérieure à une tension superficielle du fluide (12), le procédé comprenant :

- appliquer le signal de commande (30) à ou entre (*on or across*) une paire d'électrodes (8) étant en contact fluidique avec la ou les chambres (15), provoquant ainsi une force électrocapillaire agissant sur l'élément de commande de scellement (13).

12. Le procédé d'après la revendication 11,

sachant que le signal de commande (30) appliqué est configuré de manière que la force électrocapillaire provoquée par le signal de commande (30) s'oppose à la force capillaire intrinsèque et est supérieure à la force capillaire intrinsèque, de manière que l'élément de commande de scellement (13) se déplace au moins partiellement hors de ladite au moins une chambre (15) en réponse au signal de commande (30), permettant ainsi un déplacement du fluide (12) dans le canal de fluide (20), et/ou

sachant que le signal de commande (30) appliqué est configuré de manière à réduire une tension superficielle de l'élément de commande de scellement (13).

**13.** Le procédé d'après la revendication 11 ou 12, sachant que le déplacement du fluide (12) se produit de manière autopropulsée et/ou par pompage du fluide (12) vers l'intérieur et/ou hors du canal de fluide (20).

**14.** Le procédé d'après l'une quelconque des revendications de 11 à 13, comprenant en outre le fait de :

- définir un taxel en déplaçant le fluide (12) à l'intérieur du canal de fluide (20).

Fig. 1 (Prior Art)

EP 4 068 249 B1

Fig. 2

23

Fig. 3

Fig. 4

Fig. 5

EP 4 068 249 B1

Fig. 6

Fig. 7

| Properties \ Concept | Piezoactuators | Servomotors | Pneumatics | Electroactive polymers | Thermo-pneumatics | Shape-memory-alloys-/polymers | Light-activated polymers | Hyperflat | Tactonom | Invention |
|---|---|---|---|---|---|---|---|---|---|---|
| Suitable for A4 size | ✓ | X | X | X | ✓ | ✓ | ✓ | ✓ | ✓ | ✓ |
| Switching refresh rate | ✓ | ✓ | ✓ | ✓ | X | ✓ | ✓ | ✓ | X | ✓ |
| Sufficient taxel height | ✓ | ✓ | ✓ | X | ✓ | ✓ | X | ✓ | ✓ | ✓ |
| Support of greyscale | X | ✓ | X | X | X | X | X | X | X | ✓ |
| Bistable | X | ✓ | X | X | X | X | X | X | ✓ | ✓ |
| Mechanical taxel stability | ✓ | ✓ | ✓ | X | ✓ | ✓ | ✓ | ✓ | ✓ | ✓ |
| Resolution for graphics | ✓ | X | X | X | ✓ | ✓ | X | ✓ | X | ✓ |
| Technological scalability | X | X | X | X | ✓ | X | ✓ | X | X | ✓ |
| Overall costs | X | X | X | ✓ | ✓ | X | ✓ | X | ✓ | ✓ |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20180158367 A1
- US 20120299905 A1
- WO 2003081052 A1
- US 20140034141 A1
- US 9689408 B
- WO 2013139418 A1
- WO 2004001943 A1

### Non-patent literature cited in the description

- **M. A. UNGER ; H. P. CHOU et al.** *Science,* 2000, vol. 288, 113
- **T. THORSEN ; S. J. MAERKL et al.** *Science,* 2002, vol. 298, 580
- **C. RICHTER ; K. SACHSENHEIMER et al.** *Microfluid. Nanofluid.,* 2016, vol. 20, 130
- **H. HERNANDEZ ; E. PREZA et al.** Electronics, Robotics and Automotive Mechanics Conference. *CERMA'09.,* 2009, vol. 402
- **X. WU ; H. ZHU et al.** *TRANSDUCERS 2007-2007 International Solid-State Sensors, Actuators and Microsystems Conference,* 2007, vol. 1409
- **H. S. LEE ; H. PHUNG et al.** *Sensors and Actuators A: Physical,* 2014, vol. 205, 191
- **J. S. LEE ; S. LUCYSZYN.** *Journal of Microelectromechanical Systems,* 2005, vol. 14, 673
- **T. MATSUNAGA ; K. TOTSU et al.** *Displays,* 2013, vol. 34, 89
- **N. TORRAS ; K. ZINOVIEV et al.** *Sensors and Actuators A: Physical,* 2014, vol. 208, 104
- **K. A. KACZMAREK ; J. G. WEBSTER et al.** *IEEE Trans. Biomed. Eng.,* 1991, vol. 38, 1
- **N. RAJAEI ; M. OHKA et al.** *International Journal of Advanced Robotic Systems,* 2016, vol. 13
- **A. RUSSOMANNO ; S. O'MODHRAIN et al.** *IEEE Trans. Haptics,* 2015, vol. 8, 287
- **E. WILHELM ; A. VOIGT et al.** *MULTIsensory Interaction and Assitive Technology, Madeira, Portugal,* 2015